# EUROPEAN PATENT APPLICATION

(11) **EP 2 803 522 A1**
(43) Date of publication of application: **19.11.2014**
(21) Application number: 14158807.9
(22) Date of filing: 11.03.2014
(51) Int. Cl.: B60L 11/18, H02J 5/00, H02J 7/00, H02J 7/02, H02J 17/00, H04B 5/00, G01V 3/08

(54) **Foreign object detection device and non-contact power transfer device**

(30) Priority: 17.05.2013 JP 2013105527
(71) Applicant: Kabushiki Kaisha Toshiba, Tokyo 105-8001 (JP)
(72) Inventor: Moritsuka, Fumi, Tokyo, 105-8001 (JP); Onizuka, Kohei, Tokyo, 105-8001 (JP); Kudo, Hiroki, Tokyo, 105-8001 (JP); Otaka, Shoji, Tokyo, 105-8001 (JP); Ishihara, Hiroaki, Tokyo, 105-8001 (JP); Ikeuchi, Katsuyuki, Tokyo, 105-8001 (JP)
(74) Representative: Hoffmann Eitle

(57) **Abstract**

A foreign object detection device has a foreign object detector configured to detect a foreign object when a power receiver receives power from a power transmitter in a non-contact manner, the foreign object detector being arranged between the power receiver and the power transmitter, and a power control signal generator configured to generate a power control signal which controls the power transmitted from the power transmitter when the foreign object is detected by the foreign object detector.

## Description

### FIELD

Embodiments of the present invention relate to a foreign object detection device and a non-contact power transfer device.

### BACKGROUND

A non-contact power transfer system for transferring power in a non-contact manner is beginning to spread. In this system, when a foreign object intrudes into a power transfer path between a power transmitter and a power receiver, temperature of the foreign object rises, which is one of problems to be concerned about. From the viewpoint of safety, it is necessary to detect whether a foreign object exists near the power transfer path.

As a technique for detecting a foreign object, it is suggested to detect transfer efficiency between the power transmitter and power receiver, and to temporarily stop transmitting power when the transfer efficiency is less than a predetermined value and it is judged that there exists a foreign object.

However, in this technique, it is impossible to detect a foreign object which is not a great obstacle to power transfer frequency. For example, when the transfer frequency is around 100 kHz, a foreign object such as human and aluminum cannot be detected.

### BRIEF DESCRIPTION OF THE DRAWINGS

Fig. 1 is a diagram showing a schematic structure of a non-contact power transfer device 2 having a foreign object detection device 1 according to a first embodiment.
Fig. 2 is a diagram showing an example of the installation location of the non-contact power transfer device 2.
Fig. 3 is a diagram showing an example of the installation location of a foreign object detector 6.
Fig. 4 is a diagram showing another example of the installation location of the foreign object detector 6.
Fig. 5 is a diagram showing still another example of the installation location of the foreign object detector 6.
Fig. 6 is a diagram showing a further example of the installation location of the foreign object detector 6.
Fig. 7 is a diagram showing an example in which the installation location of the foreign object detector 6 can be changed.
Fig. 8 is a diagram showing another example in which the installation location of the foreign object detector 6 can be changed.
Fig. 9 is a diagram showing still another example in which the installation location of the foreign object detector 6 can be changed.
Fig. 10 is a diagram showing an example in which the foreign object detector 6 can detect a foreign object from different directions.
Fig. 11 is a diagram showing the non-contact power transfer device 2 according to a second embodiment.
Fig. 12 is a diagram showing the non-contact power transfer device 2 according to a third embodiment.
Fig. 13 is a block diagram of the part concerning non-contact power transfer to a car according to a fourth embodiment.
Fig. 14 is a diagram showing an example of the internal structure of each of a power transmitter's transfer unit 34 and a power receiver's transfer unit 24.
Fig. 15 is a circuit diagram showing a modification example of the internal structure of each of the power transmitter's transfer unit 34 and power receiver's transfer unit 24.
Fig. 16 is a circuit diagram showing another modification example of the internal structure of each of the power transmitter's transfer unit 34 and power receiver's transfer unit 24.
Fig. 17 is a circuit diagram showing still another modification example of the internal structure of each of the power transmitter's transfer unit 34 and power receiver's transfer unit 24.
Fig. 18 is a circuit diagram showing a further modification example of the internal structure of each of the power transmitter's transfer unit 34 and power receiver's transfer unit 24.
Fig. 19 is a circuit diagram showing a still further modification example of the internal structure of each of the power transmitter's transfer unit 34 and power receiver's transfer unit 24.
Fig. 20 is a flow chart showing an example of the foreign object detection process performed by the foreign object detection device 1 according to the first to fourth embodiments.
Fig. 21 is a diagram showing the operation performed by the foreign object detector 6 according to a sixth embodiment.

### DETAILED DESCRIPTION

According to one embodiment, a foreign object detection device has a foreign object detector configured to detect a foreign object when a power receiver receives power from a power transmitter in a non-contact manner, the foreign object detector being arranged between the power receiver and the power transmitter, and a power control signal generator configured to generate a power control signal which controls the power transmitted from the power transmitter when the foreign object is detected by the foreign object detector.

Embodiments will now be explained with reference to the accompanying drawings.

### (First embodiment)

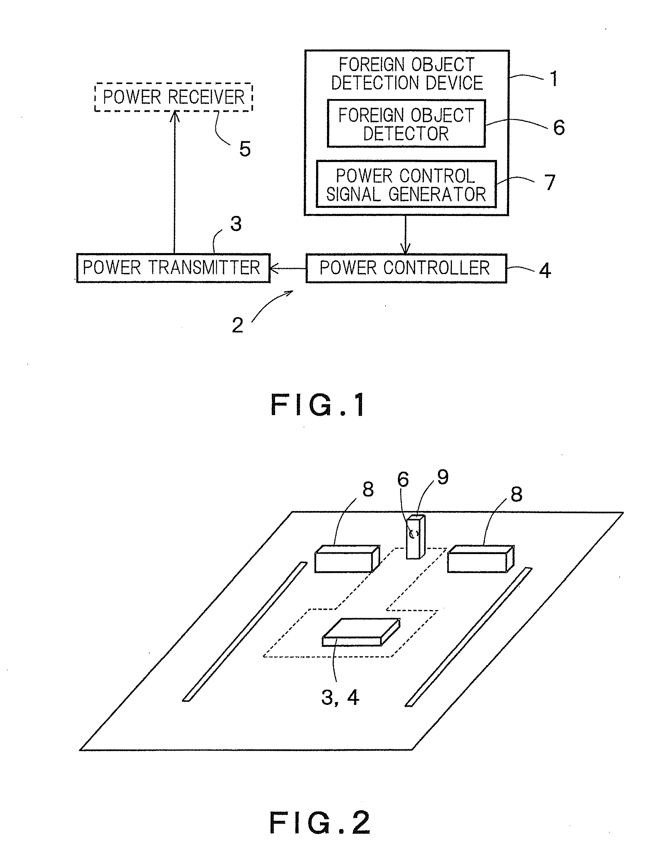

Fig. 1 is a diagram showing a schematic structure of a non-contact power transfer device 2 having a foreign object detection device 1 according to a first embodiment. The non-contact power transfer device 2 of Fig. 1 has the foreign object detection device 1, a power transmitter 3, and a power controller 4.

The power transmitter 3 transmits power to a power receiver 5 in a non-contact manner. The power receiver 5 is mounted on e.g. a car. The power received by the power receiver 5 is used to charge a battery, for example. In this way, the power transmitter 3 transmits power to the power receiver 5 in a non-contact manner, and a battery-equipped machine (e.g., a car) having the power receiver 5 charges its battery utilizing this power. Instead, a driving device having the power receiver 5 drives e.g. an actuator utilizing the power received from the power transmitter 3 in a non-contact manner.

The foreign object detection device 1 detects a foreign object located on or near a power transfer path from the power transmitter 3 to the power receiver 5. The power controller 4 controls the power transmitted from the power transmitter 3, depending on whether a foreign object is detected by the foreign object detection device 1.

The foreign object detection device 1 has a foreign object detector 6 and a power control signal generator 7. The foreign object detector 6 is arranged between the power transmitter 3 and power receiver 5 to detect a foreign object which hinders the power receiver 5 from receiving the power from the power transmitter 3 or raises safety concerns. The power control signal generator 7 generates a power control signal for controlling the power transmitted from the power transmitter 3 when a foreign object is detected by the foreign object detector 6.

Fig. 2 is a diagram showing an example of the installation location of the non-contact power transfer device 2. Fig. 2 shows an example in which the non-contact power transfer device 2 is provided in a parking space. In the example of Fig. 2, the power transmitter 3 and power controller 4 are embedded in the ground nearly at the center of the parking space, and the foreign object detection device 1 is incorporated into a column 9 installed between two car stops 8. In the example shown in Fig. 2, the power transmitter 3 and power controller 4 are held in the same housing, but the power transmitter 3 and power controller 4 may be held in different housings. Further, the power controller 4 may be provided in e.g. a plug-in station (battery charger) installed on the ground, instead of being embedded in the ground.

It is desirable to install the foreign object detector 6 at a position looking over the power transmission path from the power transmitter 3 to the power receiver 5, in order that the foreign object detector 6 correctly detects whether a foreign object exists near the power transmission path when or before the power transmitter 3 starts transmitting power to the power receiver 5 of a car parked in the parking space. For example, the column 9 having the foreign object detector 6 is installed in the middle between the two car stops 8 contacting a right wheel and a left wheel of the car, and behind the face of each of the two car stops contacting the wheels.

The foreign object detector 6 is formed using, e.g., photoelectronic sensor, ultrasonic sensor, millimeter wave sensor, imaging device (such as CCD sensor and CMOS sensor), temperature sensor, or photodetector, to detect the existence or nonexistence of a foreign object using a change in light, magnetism, radio wave, sound wave, image, temperature, etc.

A reflective sensor such as photoelectronic sensor, ultrasonic sensor, and millimeter wave sensor can determine that there exists a foreign object when detected reflection intensity exceeds or falls below a threshold value. A temperature sensor can determine that there exists a foreign object when a rapid change in temperature is detected or when temperature exceeds or falls below a threshold value. A CCD/CMOS sensor for detecting images can determine that there exists a foreign object when an object different from the power transmitter 3 and car is detected. It is possible to previously store a state having no foreign object, to determine that there exists a foreign object when a difference having a predetermined value or greater is detected. This can reduce computational complexity when judging whether a foreign object exists. Further, when detecting images, the detection range can be expanded by taking images using a wide-angle lens or a fish-eye lens.

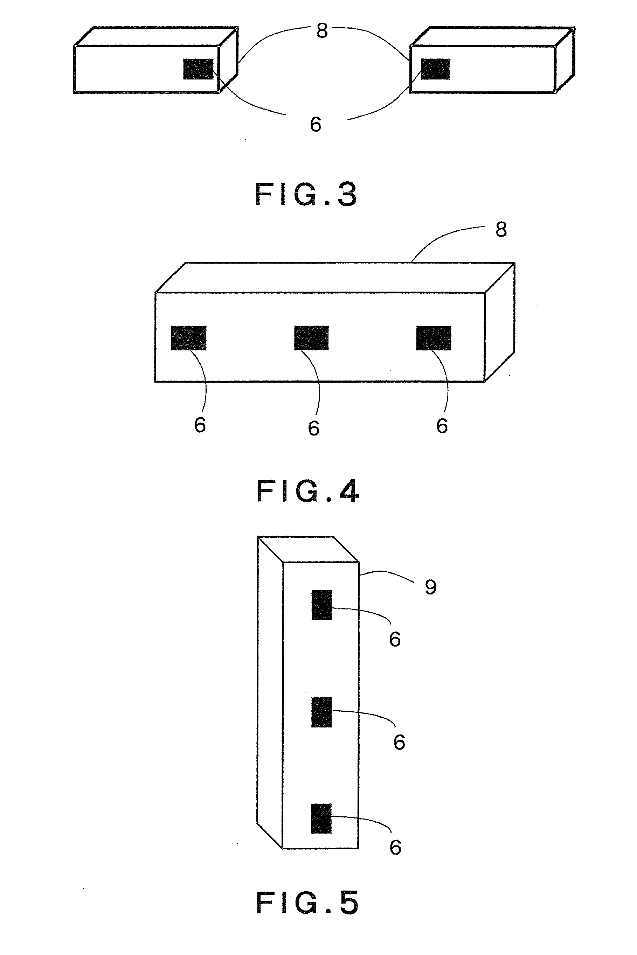

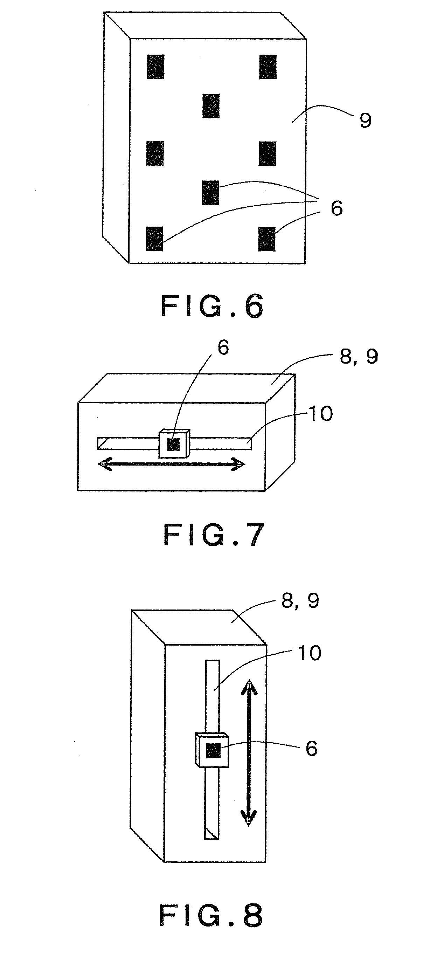

In the example shown in Fig. 2, the foreign object detector 6 is incorporated into the column 9, but the foreign object detector 6 may be provided on the ground or installed in the car stop 8. As shown in Fig. 3 for example, the foreign object detector 6 may be installed in the car stop 8 so that it is located closer and closer to the surface facing another car stop 8, to prevent the foreign object detectors 6 installed in the two car stops 8 from being hidden behind the right and left wheels of a car contacting the car stops 8. Instead, as shown in Fig. 4, a plurality of foreign object detectors 6 may be installed in one car stop 8. Instead, as shown in Fig. 5, a plurality of foreign object detectors 6 may be installed at different heights in the column 9 installed between the two car stops 8 contacting the right and left wheels of a car. Instead, as shown in Fig. 6, the width of the column 9 may be increased to install a plurality of foreign object detectors 6 in the column 9 in the direction along the ground and in the vertical direction respectively. In Fig. 6, the foreign object detectors 6 are provided in a staggered arrangement, but the foreign object detectors 6 may be arranged in a matrix.

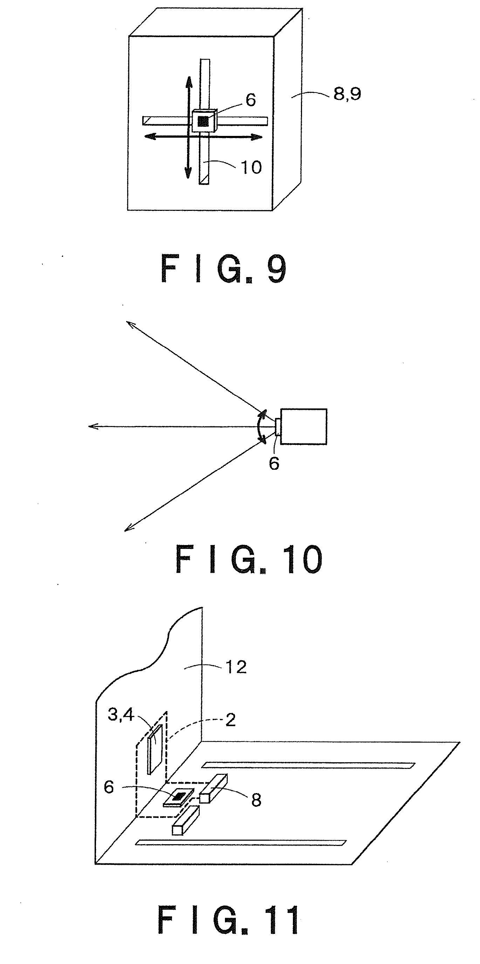

In the examples explained using Figs. 3 to 6, the foreign object detector 6 is positionally-fixed, but the foreign object detector 6 may be movable in a predetermined direction. For example, Fig. 7 shows an example in which the car stop 8 or column 9 has a guide 10 which enables the foreign object detector 6 to move in the direction along the ground. Fig. 8 shows an example in which the car stop 8 or column 9 has the guide 10 which enables the foreign object detector 6 to move in the vertical direction. Fig. 9 shows an example in which the car stop 8 or column 9 has the guide 10 which enables the foreign object detector 6 to move in the direction along the ground and in the vertical direction. Further, the foreign object detector 6 may move in an arbitrary direction in the two-dimensional plane defined by the ground direction and the vertical direction.

In Figs. 7 to 9, the foreign object detector 6 detects whether a foreign object exists near the power transfer path between the power transmitter 3 and power receiver 5, while moving along the guide 10. This makes it possible to surely look over the whole of the power transfer path with only one foreign object detector 6, by which the existence or nonexistence of a foreign object can be correctly detected. When the foreign object detector 6 can move as stated above, the detection range for a foreign object can be broadened, which eliminates the need to provide a plurality of foreign object detectors 6.

To detect a foreign object, the foreign object detector 6 of Figs. 7 to 9 may constantly move along the guide 10, or may move to an optimum position along the guide 10 when judging that the foreign object detector 6 is hidden behind a car etc. and unable to look over the whole of the power transfer path.

Further, as shown in Fig. 10, the foreign object detector 6 may detect a foreign object from different directions, without moving the housing of the foreign object detector 6. In this case, the direction from which a foreign object is detected may be changed within a predetermined angular range from the ground direction, within a predetermined angular range from the vertical direction, or in the circumferential or spherical direction defining the installation position of the foreign object detector 6 as the center. In each case, the detection range for a foreign object can be broadened with only one foreign object detector 6, which eliminates the need to provide a plurality of foreign object detectors 6, while reducing the size of the foreign object detector 6 compared to the case of moving the foreign object detector 6 along the guide 10.

As stated above, in the first embodiment, when the power transmitter 3 transfers power to the power receiver 5 in a non-contact manner, the foreign object detector 6 detects whether a foreign object exists on or near the power transfer path, and performs control for e.g. stopping the power transfer from the power transmitter 3 if a foreign object is detected, which makes it possible to secure safety and improve power efficiency.

According to the first embodiment, when e.g. parking a car in a parking space to charge the battery of the car in a non-contact manner, it is possible to transfer power while detecting a foreign object by the foreign object detectors 6 installed in or near the car stops 8. This makes it possible to charge the battery in an optimum state without troubling the driver etc. of the car. Further, the foreign object detectors 6 installed in the car stops 8 or in the column 9 between the two car stops 8 can adequately look over the power transfer path from the power transmitter 3 to the power receiver 5, which makes it possible to detect a foreign object with high reliability. Since a foreign object can be detected instantaneously, safety can be secured while improving power efficiency.

### (Second embodiment)

In the example shown in the first embodiment, the power transmitter 3 and power controller 4 are provided on the ground. On the other hand, a second embodiment to be explained below is characterized in providing the power transmitter 3 and power controller 4 on a wall 12 of the parking area.

Fig. 11 is a diagram showing the non-contact power transfer device 2 according to the second embodiment. Fig. 11 shows an example in which the power transmitter 3 and power controller 4 are provided on the wall 12 provided behind the car stops 8 in the parking space. In the example shown in Fig. 11, the power transmitter 3 and power controller 4 are held in the same housing, but the power transmitter 3 and power controller 4 may be held in different housings. Further, the power controller 4 may be provided at a location different from the wall 12.

The foreign object detector 6 of Fig. 11 is provided on the ground behind the car stops 8. In the case of Fig. 11, the power receiver 5 is provided around taillights or headlights of a car parked in the parking space, and the power transfer path for transferring power from the power transmitter 3 provided on the wall 12 to the power receiver 5 is arranged above the foreign object detector 6 provided on the ground. Thus, the foreign object detector 6 can correctly detect a foreign object intruding into the power transfer path by setting the direction of detecting the foreign object in an upward direction.

As stated above, in the second embodiment, at least the power transmitter 3 is installed in the wall 12 behind a car, and the foreign object detector 6 is provided on the ground to look over the power transfer path from the power transmitter 3 to the power receiver 5, which makes it possible to correctly detect whether a foreign object intrudes into the power transfer path.

### (Third embodiment)

A third embodiment to be explained below is different from the first and second embodiments in the installation location of the foreign object detector 6.

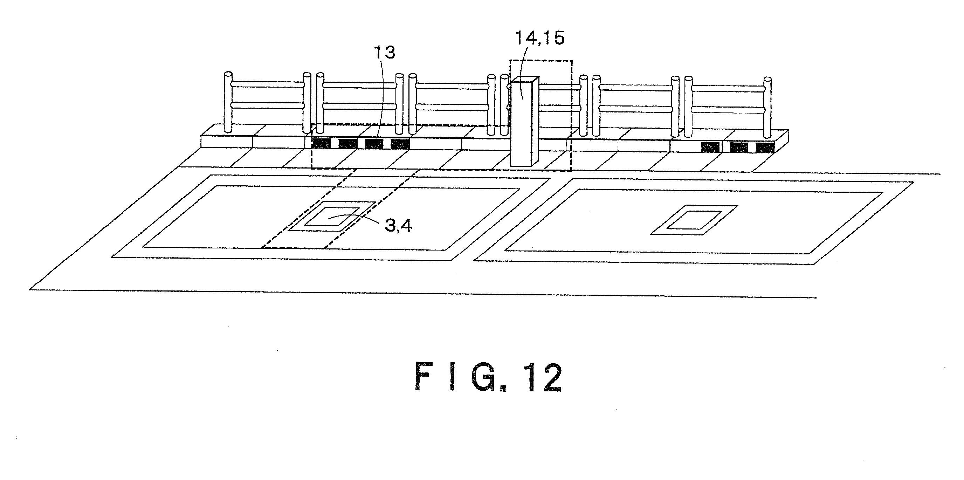

Fig. 12 is a diagram showing the non-contact power transfer device 2 according to the third embodiment. In the non-contact power transfer device 2 of Fig. 12, the power transmitter 3 and power controller 4 are installed on the ground nearly at the center of a parking space, similarly to the first embodiment. On the other hand, in the non-contact power transfer device 2 of Fig. 12, the foreign object detectors 6 are provided on a curb 13 on the side of the parking space. More specifically, the foreign object detectors 6 are provided in the curb 13 to be closest to the power transmitter 3, in order to look over the power transfer path from the power transmitter 3 to the power receiver 5 of a car.

Further, in the non-contact power transfer device 2 of Fig. 12, a foreign object notifier 15 is provided in a parking meter 14 installed near the curb 13 on the side of the parking space. This foreign object notifier 15 issues a predetermined warning when a foreign object is detected by the foreign object detector 6. The foreign object notifier 15 notifies the driver etc. of the car about the existence of a foreign object by lighting or blinking a light-emitting device such as an LED, or by changing the display color of the light-emitting device.

The warning issued by the foreign object notifier 15 should not be necessarily limited to a warning displayed using the light-emitting device. For example, it is possible to issue a warning beep or an audio warning message from a speaker. Further, when the parking meter 14 has a wireless machine, it is possible to transmit a warning signal to the wireless machine mounted on the car, to display a warning on the front panel etc. of the car or to output a warning beep or a warning message from the speaker of the car. Instead, it is possible to transmit warning information to a mobile terminal of the driver etc. from the wireless machine mounted on the parking meter 14 or car, to output some kind of warning from the mobile terminal.

As stated above, in the third embodiment, the foreign object detector 6 is provided on the curb 13 near the power transmitter 3, which makes it possible to correctly detect a foreign object even when the car stops 8 are not provided. Further, in the third embodiment, when a foreign object is detected, the information about the foreign object detection is wirelessly transmitted to the foreign object notifier 15, which makes it possible to issue a predetermined warning when a foreign object is detected and to quickly take a countermeasure for e.g. removing the foreign object.

The foreign object notifier 15 as stated above may be provided in the first or second embodiment. Further, the foreign object detector 6 in the third embodiment and the foreign object detector 6 in the first or second embodiment may be arbitrarily combined and mounted. Providing a plurality of foreign object detectors 6 to detect a foreign object from a plurality of directions can improve the detection accuracy for a foreign object.

### (Fourth embodiment)

A fourth embodiment to be explained below shows a concrete structure of a car capable of receiving power from the non-contact power transfer device 2 according to the first to third embodiments.

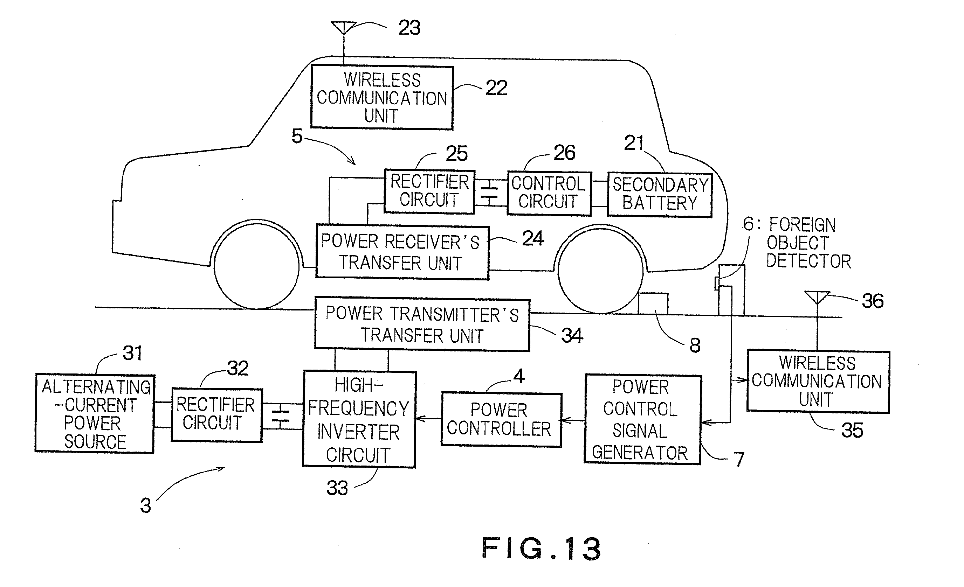

Fig. 13 is a block diagram of the part concerning non-contact power transfer to a car according to the fourth embodiment. The car of Fig. 13 has the power receiver 5, a secondary battery 21, a wireless communication unit 22, and an antenna 23. The power receiver 5 has a power receiver's transfer unit 24, a rectifier circuit 25, and a control circuit 26.

The power transmitter 3 of Fig. 13 is embedded in the ground for example, and has an alternating-current power source 31, a rectifier circuit 32, a high-frequency inverter circuit 33, and a power transmitter's transfer unit 34. The foreign object detection device 1 is provided behind the car stops 8, and has the foreign object detector 6, a wireless communication unit 35, and an antenna 36. In the example shown in Fig. 13, the foreign object detector 6 includes the power control signal generator 7 shown in Fig. 1.

In the power transmitter 3, power from the alternating-current power source 31 such as a commercial power source is converted into direct current by the rectifier circuit 32, and further converted into transfer frequency by the high-frequency inverter circuit 33. The power transmitter's transfer unit 34 transfers power to the power receiver's transfer unit 24 of the car in a non-contact manner. The power received by the power receiver's transfer unit 24 is converted into direct current by the rectifier circuit 25, and its voltage is controlled by the control circuit 26, and finally charged in the secondary battery 21.

As explained in the first and second embodiments, the power transmitter's transfer unit 34 in the power transmitter 3 is installed in or on the ground. The power receiver's transfer unit 24 in the car is installed on the bottom face of the car or near taillights or headlights of the car.

The foreign object detection device 1 is installed at a position looking over the power transfer path from the power transmitter 3 to the power receiver 5. Actually, the foreign object detection device 1 is installed near the power transmitter 3 and power receiver 5. The foreign object detection device 1 is installed at the same height as the power transmitter 3, or at a predetermined height in a space between the power transmitter 3 and power receiver 5.

When a foreign object is detected by the foreign object detector 6 in the middle of power transfer, the wireless communication unit 35 in the foreign object detection device 1 notifies the wireless communication unit 22 in the car about the situation, to display a warning in the car, for example. Further, when a foreign object is detected by the foreign object detector 6, the power controller 4 reduces the power to be transmitted by stopping the operation of the high-frequency inverter circuit 33 in the power transmitter 3, lowering operating frequency of the high-frequency inverter circuit 33, or by controlling the phase of the gate signal of the high-frequency inverter circuit 33.

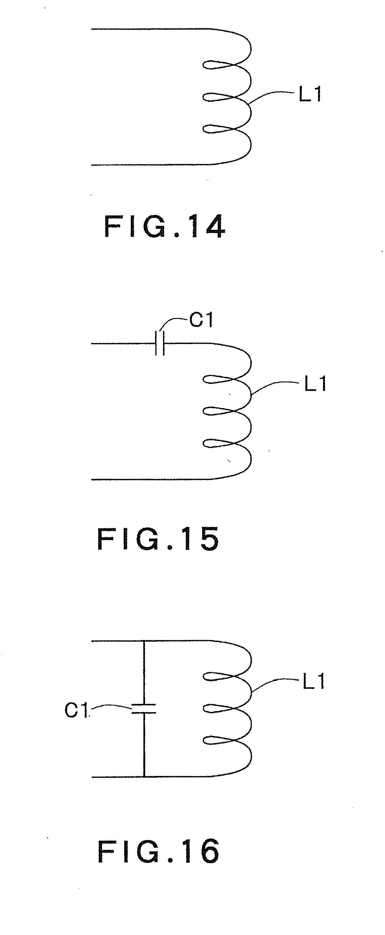

Fig. 14 is a diagram showing an example of the internal structure of each of the power transmitter's transfer unit 34 and power receiver's transfer unit 24. As shown in Fig. 14, each of the power transmitter's transfer unit 34 and power receiver's transfer unit 24 can be formed of only an inductor element L1, which is the simplest configuration. Induced electromotive force occurring in the inductor element L1 is used to transfer power in a non-contact manner.

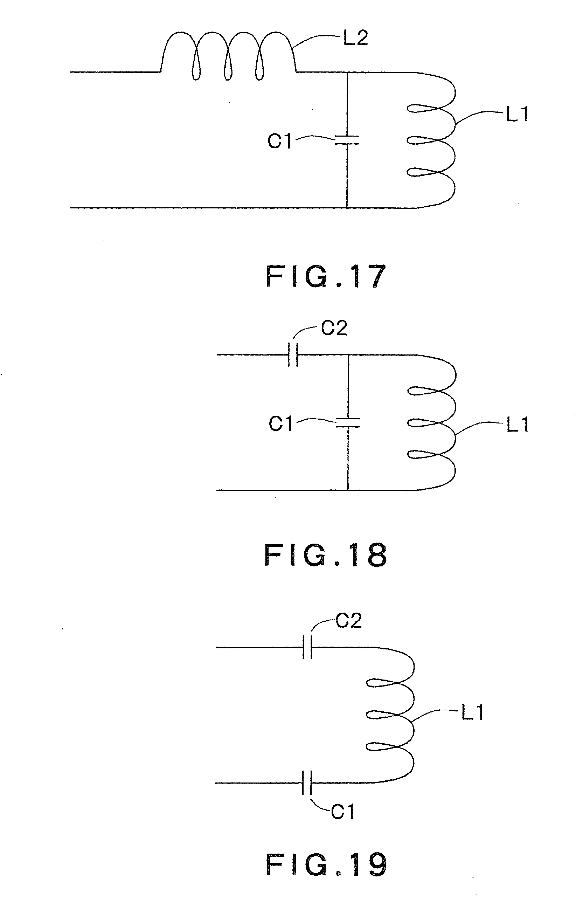

Each of Figs. 15 to 19 is a circuit diagram showing a different modification example of the internal structure of each of the power transmitter's transfer unit 34 and power receiver's transfer unit 24. Each of Figs. 15 to 19 shows a combination of the inductor element L1 and a capacitor element C1. Fig. 15 shows an example in which the inductor element L1 and capacitor element C1 are connected in series, and Fig. 16 shows an example in which the inductor element L1 and capacitor element C1 are connected in parallel. Fig. 17 shows an example in which an inductor element L2 is connected in series to a parallel circuit formed of the inductor element L1 and capacitor element C1. Fig. 18 shows an example in which a capacitor element C2 is connected in series to a parallel circuit formed of the inductor element L1 and capacitor element C1. Fig. 19 shows an example in which the inductor element L1 is connected in series to the two capacitor elements C1 and C2.

As shown in Figs. 14 to 19, each of the power transmitter's transfer unit 34 and power receiver's transfer unit 24 can be formed using one or more inductor elements and zero or more capacitor elements. When using a capacitor element, the capacitor element may be connected to the inductor element in series, parallel, or series parallel. In the case of series connection, one capacitor element may be replaced by two or more capacitor elements connected in series to an inductor element, considering the pressure resistance of the capacitor element. Further, each of the power transmitter's transfer unit 34 and power receiver's transfer unit 24 may be formed of a plurality of circuits each having one or more inductor elements L1 and zero or more capacitor elements C1. Furthermore, each of the inductor element and capacitor element may be designed to resonate at a predetermined frequency, or to increase power factor. Further, the internal structure of the power transmitter's transfer unit 34 and that of the power receiver's transfer unit 24 may be the same or different from each other.

### (Fifth embodiment)

A fifth embodiment to be explained below explains in detail a foreign object detection process performed by the foreign object detection device 1 in the non-contact power transfer device 2 according to the first to fourth embodiments.

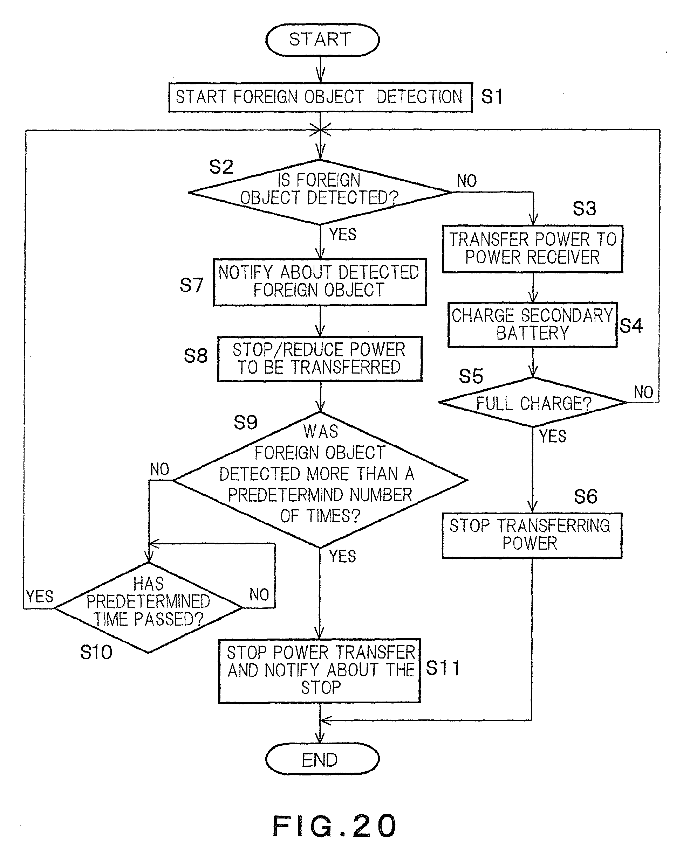

Fig. 20 is a flow chart showing an example of the foreign object detection process performed by the foreign object detection device 1 according to the first to fourth embodiments. First, when a target such as a car capable of receiving power in a non-contact manner approaches the non-contact power transfer device 2, the foreign object detection device 1 starts a foreign object detection process (Step S1). Note that in the example to be explained below, the target is a car. Whether the car is approaching or not can be detected using weight sensor, ultrasonic sensor, photoelectronic sensor, loop coil sensor, magnetic field sensor, etc. Further, the foreign object detection device 1 may wirelessly communicate with the car to detect whether the car is approaching.

The foreign object detection device 1 continuously determines whether a foreign object is detected (Step S2). If no foreign object is detected, the power transmitter 3 transfers power to the power receiver 5 of the car in a non-contact manner (Step S3), and the car charges the secondary battery 21 utilizing the power received by the power receiver 5 (Step S4). The control circuit in the car determines the remaining amount of power to be charged in the secondary battery 21 (Step S5), and stops transferring power from the power transmitter 3 to the power receiver 5 when the secondary battery 21 is fully charged (Step S6). At this time, the completion of charge may be notified to the driver etc. of the car. Note that the foreign object detection device 1 continuously detects and determines a foreign object while the power transmitter 3 transfers power to the power receiver 5 in a non-contact manner.

On the other hand, when a foreign object is detected at Step S3, the foreign object detection device 1 notifies the car or foreign object notifier 15 about the detected foreign object, by using the wireless communication unit 35 (Step S7). Upon receiving this notification, the car or foreign object notifier 15 performs a predetermined warning process. When the driver etc. of the car removes the foreign object responding to this warning and performs a predetermined initializing process, Step S1, and subsequent steps are performed again.

Further, when a foreign object is detected, the power controller 4 stops or reduces the power transferred from the power transmitter 3, in order not to cause a safety problem (Step S8).

Next, whether a foreign object was detected more than a predetermined number of times is determined (Step S9, foreign object detection frequency determining unit). If the foreign object detection frequency is not more than the predetermined number of times, the foreign object detection device 1 waits until a predetermined time has passed since the previous foreign object was detected (Step S10), and performs Step S2 and subsequent steps again after a predetermined time has passed. If the foreign object detection frequency is more than a predetermined number of times, the foreign object detection device 1 stops transferring power from the power transmitter 3, and notifies the driver etc. of the car about the stop of power transfer (Step S11).

As stated above, the foreign object detection device 1 continuously detects a foreign object while power is transferred from the power transmitter 3 to the power receiver 5 in a non-contact manner. Accordingly, when a foreign object is detected, the foreign object detection device 1 can quickly stops or reduces the power to be transferred, which guarantees safety while preventing such a defect as the deterioration in power efficiency due to the existence of the foreign object. In this way, power efficiency can be improved.

### (Sixth embodiment)

A sixth embodiment to be explained below is different from the first to fifth embodiments in how to detect a foreign object.

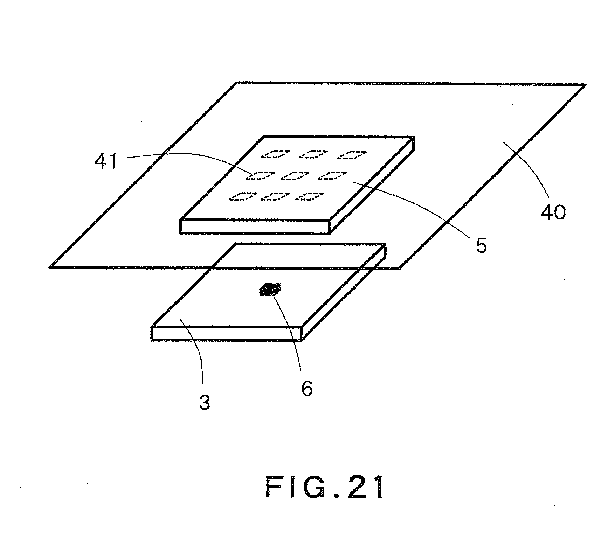

Fig. 21 is a diagram showing the operation performed by the foreign object detector 6 according to the sixth embodiment. Fig. 21 is based on an assumption that the power transmitter 3 is provided on the ground or embedded in the ground and the power receiver 5 is provided on the bottom face of a car 40.

The foreign object detector 6 of Fig. 21 is provided on the same plane as the power transmitter 3 (e.g., on the top surface of the power transmitter 3), to detect the bottom face of the car, i.e. to detect upward. In this way, the foreign object detector 6 detects a foreign object existing between the power transmitter 3 and the bottom face of the car 40.

When the foreign object detector 6 is e.g. a capacitance sensor, it determines that there exists a foreign object when the capacitance exceeds or falls below a threshold value. Further, when the foreign object detector 6 is e.g. a CCD sensor, a CMOS sensor, or a photodetector, it can detect whether a foreign object exists depending on whether one or more characteristic patterns 41 created using LED lights or paints and provided on the bottom face of the power receiver 5 are hindered by a foreign object when the foreign object detector 6 images the power receiver 5 from the power transmitter 3. In Fig. 21, the characteristic patterns 41 are arranged in a matrix, but the characteristic patterns 41 may be provided in a staggered arrangement or a random arrangement.

As stated above, in the sixth embodiment, the foreign object detector 6 is provided on or near the top surface of the power transmitter 3 to detect a foreign object in the same direction as the power transfer direction, which makes it possible to correctly detect whether the power transfer path is hindered by a foreign object. Further, providing the characteristic patterns 41 can reduce computational complexity when judging whether a foreign object exists.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A foreign object detection device comprising:
a foreign object detector configured to detect a foreign object when a power receiver receives power from a power transmitter in a non-contact manner, the foreign object detector being arranged between the power receiver and the power transmitter; and
a power control signal generator configured to generate a power control signal which controls the power transmitted from the power transmitter when the foreign object is detected by the foreign object detector.

2. The device of claim 1,
wherein the foreign object detector is installed at height identical to the power transmitter, or at a predetermined height in a space between the power transmitter and the power receiver.

3. The device of claim 1,
wherein the foreign object detector is installed above the power transmitter which is installed on a predetermined plane, to look over the power transmitter or the power receiver.

4. The device of claim 1,
wherein the foreign object detector is installed on a face of a car stop contacting a wheel, behind this face, or between two car stops contacting a right wheel and a left wheel of a car.

5. The device of claim 1,
wherein the foreign object detector is incorporated into a car stop.

6. The device of claim 1,
wherein the foreign object detector is installed on a surface of a curb at a roadside or incorporated into the curb.

7. The device of claim 1, further comprising:
a guide capable of moving the foreign object detector in a predetermined direction.

8. The device of claim 1,
wherein the foreign object detector comprises a structure capable of varying a direction of detecting the foreign object.

9. The device of claim 1, further comprising:
a foreign object notifier configured to notify that the foreign object was detected by the foreign object detector.

10. The device of claim 1, further comprising:
a foreign object detection frequency determining unit configured to determine whether the foreign object detector detected the foreign object more than a predetermined number of times,
wherein when the foreign object detection frequency determining unit determines that the foreign object was detected more than the predetermined number of times, the power control signal generator generates the power control signal for stopping the power transmitted from the power transmitter.

11. A non-contact power transfer device comprising:
a power transmitter configured to transmit power to a power receiver in a non-contact manner;
a foreign object detection device configured to detect a foreign object located on or near a power transfer path from the power transmitter to the power receiver; and
a power controller configured to control the power transmitted from the power transmitter, depending on whether a foreign object is detected by the foreign object detection device,
wherein the foreign object detection device comprises:
a foreign object detector configured to detect the foreign object, the foreign object detector being arranged between the power receiver and the power transmitter; and
a power control signal generator configured to generate a power control signal which controls the power transmitted from the power transmitter when the foreign object is detected by the foreign object detector.

12. The device of claim 11,
wherein the power transmitter and the power controller are installed on the ground, or provided in a battery charger installed on the ground, and
the foreign object detector is installed at the same height as the power transmitter, or at a predetermined height in a space between the power transmitter and the power receiver.

13. The device of claim 11,
wherein the foreign object detector is installed at height identical to the power transmitter, or at a predetermined height in a space between the power transmitter and the power receiver.

14. The device of claim 11,
wherein the foreign object detector is installed above the power transmitter which is installed on a predetermined plane, to look over the power transmitter or the power receiver.

15. The device of claim 11,
wherein the foreign object detector is installed on a face of a car stop contacting a wheel, behind this face, or between two car stops contacting a right wheel and a left wheel of a car.

16. The device of claim 11,
wherein the foreign object detector is incorporated into a car stop.

17. The device of claim 11,
wherein the foreign object detector is installed on a surface of a curb at a roadside or incorporated into the curb.

18. The device of claim 11, further comprising:
a guide capable of moving the foreign object detector in a predetermined direction.

19. The device of claim 11,
wherein the foreign object detector comprises a structure capable of varying a direction of detecting the foreign object.

20. The device of claim 11, further comprising:
a foreign object notifier configured to notify that the foreign object was detected by the foreign object detector.
